# EUROPEAN PATENT APPLICATION

(11) **EP 4 160 464 A1**
(43) Date of publication of application: **05.04.2023**
(21) Application number: 22199675.4
(22) Date of filing: 04.10.2022
(51) Int. Cl.: G06F 30/17, G06F 113/10, G06F 119/18

(54) **MATERIAL SPECIFICATION TO FACILITATE PART CREATION IN COMPUTER AIDED DESIGN AND MANUFACTURE INTERFACE**

(30) Priority: 04.10.2021 US 202163252109 P
(71) Applicant: Autodesk, Inc., San Francisco, CA 94105 (US)
(72) Inventor: COHEE, Robert Michael, San Francisco, 94105 (US); SPENCER, Joshua David, San Francisco, 94105 (US); GARDINER, Garin Michael, San Francisco, 94105 (US); GROH, Miroslav, San Francisco, 94105 (US); ZATECKA, Martin, San Francisco, 94105 (US); SHAO, Na, San Francisco, 94105 (US); PRCHLIK, Vaclav, San Francisco, 94105 (US)
(74) Representative: Fish & Richardson P.C.

(57) **Abstract**

Methods, systems, and apparatus, including medium-encoded computer program products, for computer aided design and manufacture of a part by generating a design aspect of a feature of the part with a material specification, include: receiving, by a computer aided design program, selection of a material specification for a part being designed for manufacturing; receiving, by the computer aided design program, input that defines a feature of the part; generating, by the computer aided design program, a design aspect of the feature in accordance with the material specification; and providing, by the computer aided design program, the feature with the design aspect, for facilitating the manufacturing of the part.

## Description

### CROSS-REFERENCE TO RELATED APPLICATIONS

This patent application claims priority to and the benefit of U.S. Provisional Patent Application No. 63/252,109, filed on October 4, 2021, which is incorporated herein by reference in its entirety.

### BACKGROUND

This specification relates to producing three-dimensional (3D) geometry in computer aided design of physical parts, which can be manufactured using additive manufacturing, subtractive manufacturing, other manufacturing systems and techniques, or a combination of these.

Computer Aided Design (CAD) software has been developed and used to generate 3D representations of objects, and Computer Aided Manufacturing (CAM) software has been developed and used to manufacture the physical structure of those objects, e.g., using Computer Numerical Control (CNC) manufacturing techniques. The CAD software has also included software tools that can be used to redesign and enhance 3D parts of the objects. The CAD software has been used in conjunction with additive manufacturing systems and techniques and subtractive manufacturing systems and techniques.

Additive manufacturing, also known as solid free form fabrication or 3D printing, refers to any manufacturing process where 3D objects are built up from raw material in a series of layers or cross-sections. Examples of additive manufacturing include Fused Filament Fabrication (FFF), Selective Laser Sintering (SLS), and Direct Metal Laser Sintering (DMLS).

Subtractive manufacturing refers to any manufacturing process where 3D objects are created from stock material (generally a "blank" or "workpiece" that is larger than the 3D object) by cutting away portions of the stock material. Such subtractive manufacturing processes typically involve the use of multiple CNC machine cutting tools in a series of operations, starting with a roughing operation, an optional semi-finishing operation, and a finishing operation.

### SUMMARY

This specification relates to facilitating part creation and design in computer aided design and manufacture of physical structures using material specification.

When designing a part for manufacturing, some designers or engineers may not know what type of material the end product will be made from, and a material can have corresponding manufacturing requirements that are not readily apparent. Thus, the design may violate certain manufacturing requirements, e.g., for molded parts, such as making walls that are too thin or too thick, walls that are too shallow, and making undercuts and knife edges in the model that create problems for manufacturing. Existing design tools of computer aided design programs may offer general tools to manually build a desired geometry for parts to be manufactured. Less experienced users of the computer aided design programs often struggle with material selection and making sure that the designed model is manufacturable. More experienced users of the computer aided design programs may struggle with the time it takes to ensure their model is manufacturable.

Furthermore, when a material is chosen or changed, the user often needs to spend a substantial amount of time to remodel many features of the model of the part. This is because the selected material might require specific or different manufacturing requirements, e.g., a specific draft angle, wall thickness, corner radius, or multiple other requirements, to be specified in order to make the part manufacturable. Thus, the process of making material selections and/or changes is time consuming and expensive.

In general, one or more aspects of the subject matter described in this specification can be embodied in one or more methods (and also one or more non-transitory computer-readable mediums tangibly encoding a computer program operable to cause data processing apparatus to perform operations) including: receiving, by a computer aided design program, selection of a material specification for a part being designed for manufacturing; receiving, by the computer aided design program, input that defines a feature of the part; generating, by the computer aided design program, a design aspect of the feature in accordance with the material specification; and providing, by the computer aided design program, the feature with the design aspect, for facilitating the manufacturing of the part.

The generating can include: identifying a declaration of material manufacturing requirements from the material specification; and performing a design specification. command of the feature based on the declaration of the material manufacturing requirements The material specification can be a first material specification, and the method (or operations performed by the data processing apparatus in accordance with the computer program tangibly encoded in one or more non-transitory computer-readable mediums) can include: receiving selection of a different material specification for the feature of the part; identifying a different declaration of different material manufacturing requirements from the different material specification; and changing the design aspect of the feature by re-performing the design specification command of the feature based on the different declaration of the different material manufacturing requirements. The method (or operations performed by the data processing apparatus in accordance with the computer program tangibly encoded in one or more non-transitory computer-readable mediums) can include: receiving a user input that changes the design aspect of the feature; and providing a design recommendation for the design aspect of the feature based on the material specification.

The method (or operations performed by the data processing apparatus in accordance with the computer program tangibly encoded in one or more non-transitory computer-readable mediums) can include: presenting a user interface for user customization of material manufacturing requirements; receiving input through the user interface for the user customization of the material manufacturing requirements; and in response to receiving the input through the user interface, modifying or adding a declaration of the material manufacturing requirements. The feature can include two or more logically connected but distinct elements of the part, and generating the design aspect of the feature can include: obtaining, by the computer aided design program, a rule that takes the material specification as input and describes a logical connection between the two or more logically connected but distinct elements of the part; and generating, by the computer aided design program, the design aspect of the feature using the rule and in accordance with the material specification.

One or more aspects of the subject matter described in this specification can also be embodied in one or more systems including: a non-transitory storage medium having instructions of a computer aided design program stored thereon; and one or more data processing apparatus configured to run the instructions of the computer aided design program to perform operations specified by the instructions of the computer aided design program; wherein the operations include: receiving selection of a material specification for a part being designed for manufacturing; receiving input that defines a feature of the part; generating a design aspect of the feature in accordance with the material specification; and providing the feature with the design aspect, for facilitating the manufacturing of the part.

In general, another aspect of the subject matter described in this specification can be embodied in one or more methods (and also one or more non-transitory computer-readable mediums tangibly encoding a computer program operable to cause data processing apparatus to perform operations) including: receiving, by a computer aided design program, selection of a material specification for a part being designed for manufacturing; receiving, by the computer aided design program, a design of a feature for the part; and providing, by the computer aided design program, a design recommendation for a design aspect of the feature in accordance with the material specification.

The design recommendation can include a recommended range for a value of the design aspect, and the method (or operations performed by the data processing apparatus in accordance with the computer program tangibly encoded in one or more non-transitory computer-readable mediums) can include: receiving an updated design of the feature, wherein the updated design includes an updated value of the design aspect that is within the recommended range. The design recommendation can include an issue for the design aspect, and the method (or operations performed by the data processing apparatus in accordance with the computer program tangibly encoded in one or more non-transitory computer-readable mediums) can include: receiving selection of a different material specification for the feature of the part to remove the issue for the design aspect.

One or more aspects of the subject matter described in this specification can also be embodied in one or more systems including: a non-transitory storage medium having instructions of a computer aided design program stored thereon; and one or more data processing apparatus configured to run the instructions of the computer aided design program to perform operations specified by the instructions of the computer aided design program; wherein the operations include: receiving selection of a material specification for a part being designed for manufacturing; receiving a design of a feature for the part; and providing a design recommendation for a design aspect of the feature in accordance with the material specification.

Particular embodiments of the subject matter described in this specification can be implemented to realize one or more of the following advantages.

The systems and techniques described facilitate a user to select a material that has a corresponding material specification, and then have features of a part, e.g., a structural feature, link to material manufacturing requirements declared in the material specification of the material. The systems and techniques described provide an automated process that can connect features of a part together based on a selected material and its corresponding manufacturing declaration. This can significantly reduce the amount of time needed to design a part that is ready for manufacturing. The systems and techniques described can facilitate product design based on a material specification, e.g., through a user interface. When the user changes to a different material, the design of the features can be updated automatically according to the material specification of the different material in support of the downstream manufacturing process. This allows faster design iteration and eliminates the significant amount of design rework that would otherwise be required when a material change in the part design is made. The systems and techniques described are beneficial for less experienced users because the computer aided design program can help them with material selection. For more experienced users, the systems and techniques described can make the overall design process faster and can help standardize materials and settings used in the part design process because a user can declare a material at first creation and can link together material manufacturing requirements for manufacturing a part with the material.

When designing two or more distinct elements of a part that are logically connected, instead of manually editing multiple parameters of the elements to align and fit the elements, the systems and techniques can automatically generate the design for the two or more elements using one or more rules that describe the logical connection and in accordance with the material specification of a selected material for the part. The system and techniques can provide timely design advice and design recommendation based on manufacturability, such that a user can notice a design issue of a feature and can adjust a design aspect of the feature. After the user updates the design aspect, the systems and techniques can immediately check the updated design and provide design recommendation with the newly analyzed results.

The details of one or more embodiments of the subject matter described in this specification are set forth in the accompanying drawings and the description below. Other features, aspects, and advantages of the invention will become apparent from the description, the drawings, and the claims.

### BRIEF DESCRIPTION OF THE DRAWINGS

FIG. 1 shows an example of a system usable to design and manufacture physical structures with material specification.
FIG. 2 is a flowchart showing an example of a process to generate a feature of a part with a material specification.
FIG. 3 is a graphical rendering showing an example of generating an enclosure of an Arduino board using Acrylonitrile Butadiene Styrene (ABS).
FIG. 4 is a graphical rendering showing an example of generating an enclosure of an Arduino board using Nylon.
FIG. 5A is a graphical rendering showing an example of a user interface for user customization of material manufacturing requirements.
FIG. 5B is a graphical rendering showing an example of generating a river web using Acrylonitrile Butadiene Styrene (ABS).
FIG. 6A is a graphical rendering showing an example of generating a boss using Acrylonitrile Butadiene Styrene (ABS) and Nylon.
FIG. 6B is a graphical rendering showing an example of generating a boss that includes a top part and a bottom part.
FIG. 7 is a schematic diagram of a data processing system including a data processing apparatus, which can be programmed as a client or as a server.
FIG. 8 is a graphical rendering showing an example of providing a design recommendation.
FIG. 9 is a flowchart showing an example of a process to provide a design recommendation for a feature of a part with a material specification.

Like reference numbers and designations in the various drawings indicate like elements.

### DETAILED DESCRIPTION

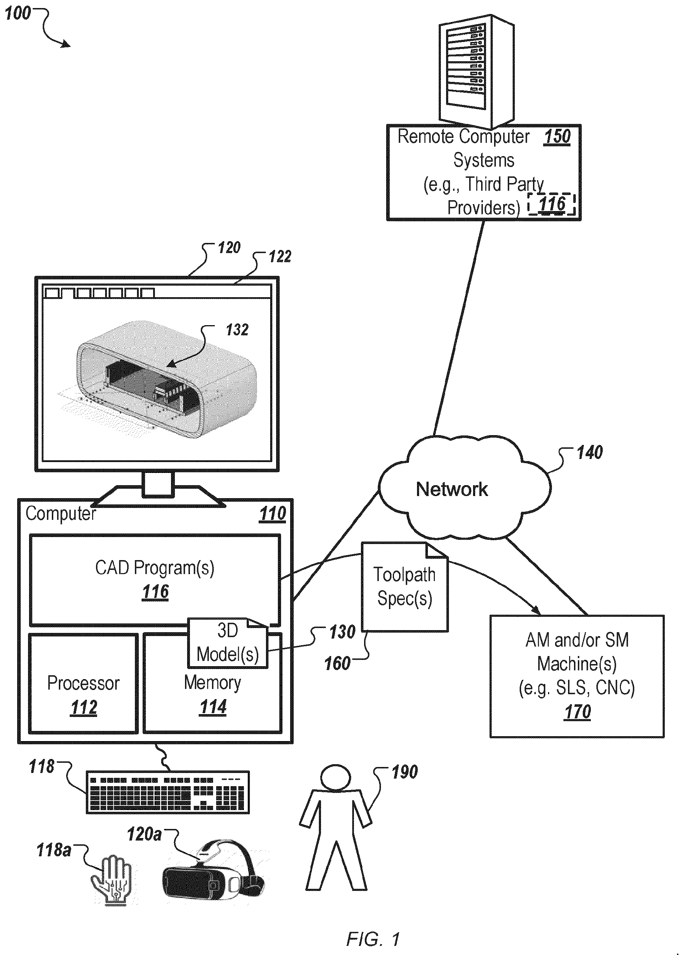

FIG. 1 shows an example of a system 100 usable to design and manufacture physical structures using material specification. A computer 110 includes a processor 112 and a memory 114, and the computer 110 can be connected to a network 140, which can be a private network, a public network, a virtual private network, etc. The processor 112 can be one or more hardware processors, which can each include multiple processor cores. The memory 114 can include both volatile and non-volatile memory, such as Random Access Memory (RAM) and Flash RAM. The computer 110 can include various types of computer storage media and devices, which can include the memory 114, to store instructions of programs that run on the processor 112, including Computer Aided Design (CAD) program(s) 116, which implement three-dimensional (3D) modeling functions, including generating design aspects of a feature of a part using a material specification of a selected material.

As used herein, CAD refers to any suitable program used to design physical structures that meet specified design requirements, regardless of whether or not the program is capable of interfacing with and/or controlling specific manufacturing equipment. Thus, CAD program(s) 116 can include Computer Aided Industrial Design (CAID) program(s), Computer Aided Engineering (CAE) program(s), Computer Aided Manufacturing (CAM) program(s), etc. The program(s) 116 can run locally on computer 110, remotely on a computer of one or more remote computer systems 150 (e.g., one or more third party providers' one or more server systems accessible by the computer 110 via the network 140) or both locally and remotely. Thus, the CAD program(s) 116 can be two or more programs that operate cooperatively on two or more separate computer processors in that a program operating locally at computer 110 can offload processing operations "to the cloud" by having one or more programs on one or more remote computer systems 150 perform the offloaded processing operations.

The CAD program(s) 116 present a user interface (UI) 122 on a display device 120 of the computer 110, which can be operated using one or more input/output devices 118 of the computer 110 (e.g., keyboard and mouse). Note that while shown as separate devices in FIG. 1, the display device 120 and/or input/output devices 118 can also be integrated with each other and/or with the computer 110, such as in a tablet computer (e.g., a touch screen can be an input/output device 118, 120). Moreover, the computer 110 can include or be part of a virtual reality (VR) or augmented reality (AR) system. For example, the input/output devices 118, 120 can include a VR/AR input glove 118a and/or a VR/AR headset 120a.

As noted above, the CAD program(s) 116 implement 3D modeling functions, which means a 3D model 132 can be built using the CAD program(s) 116. The CAD program(s) 116 can generate a design aspect of a feature of a part with a material specification to facilitate building the part from the 3D model 132. The CAD program(s) 116 can substantially reduce part design (and redesign) time using computer-based tools by assisting a user, e.g., an engineer or a designer, in performing the technical task of designing parts that are actually manufacturable.

The CAD program(s) 116 can provide a user interface (UI) 122 that allows the user to select a material specification for a part being designed for manufacturing. The CAD program(s) 116 can receive input that defines a feature of the part. The feature of the part can be a structural feature of the part, such as a wall, a river web, or a boss. In response to receiving the input that defines the feature, the CAD program(s) 116 can automatically generate a design aspect of the feature in accordance with the material specification. The design aspect of the feature can include material thickness, taper angle, minimum filet radius, etc. In some implementations, the CAD program(s) 116 can automatically populate commands that define a feature, e.g., "Extrude", "Shell", "Filet", "Boss", "Web", "Rib", "Draft", "Snap Fit", "Thicken", "Emboss", or "Rest", with values of the design aspect. In some implementations, when the user makes a change in the material for the part, the CAD program(s) 116 can automatically update the feature of the part with a material specification of the new material.

In some implementations, material specifications of various types of materials can be stored in a database. The database can be at the computer 110 locally, or can be at one or more remote computer systems 150. The material specification can be shared among users. For example, one user can define a new material specification for some feature of a part, and then other users can have access to the new material specification, e.g., through the database.

The CAD program(s) 116 can provide the feature with the design aspect added thereto for facilitating the manufacturing of the part. For example, the CAD program(s) 116 can render a visualization of the feature with the design aspect to a display device presenting a user interface of the CAD program(s) 116. For example, a user 190 can interact with the UI 122 of the CAD program(s) 116, including generating a design aspect of a feature of a part to be manufactured, so as to build and modify the 3D model 132, which can be stored in 3D model document(s) 130. In the example of FIG. 1, the 3D model 132 is of a specific enclosure design of an Arduino board, but this is merely one of many possible 3D models that can be designed using the systems and techniques described herein.

In the example shown, the 3D model 132 rendered to the display device 120 in the UI 122 shows an enclosure designed with a user selected material, e.g., Nylon or Acrylonitrile Butadiene Styrene (ABS). As described in further detail below, a design aspect, e.g., the wall thickness of the enclosure, for the 3D model 132 can be generated in accordance with a material specification of the user selected material.

For example, the CAD program(s) 116 can identify a declaration of material manufacturing requirements from the material specification. For example, an ABS material is configured to have a normal wall thickness of 1.50 mm, and a Nylon material is configured to have a normal wall thickness of 2.50 mm. The CAD program(s) 116 can perform a design specification command of the feature, e.g., a "Shell" operation, based on the declaration of the material manufacturing requirements.

While designing parts, users of CAD program(s) 116 need not manually create parameters and enter values of a design aspect of the parts, e.g., wall thickness, face draft and inner filet radius. Further, when the type of material is changed (which can often happen in the design process), the CAD program(s) 116 can automatically change various features of an already designed part in accordance with the material specification of the new material, without requiring the user to re-model their product in accordance with the material specification of the new material. The CAD program(s) 116 can be preprogrammed to recognize and account for potential material manufacturing requirements, e.g., wall thickness, taper angle, face draft, and other requirements, such as no undercuts in a three-dimensional model. Thus, the users do not need to employ various tools to check for these possible requirements, or in some cases, the users do not need to be aware of the material type or manufacturing process to be used for the part being designed.

In some implementations, the CAD program(s) 116 implement manufacturing control functions. Once the user 190 is satisfied with the 3D model 132, the 3D model 132 can be stored as the 3D model document(s) 130 and/or used to generate another representation of the model (e.g., a .STL file for additive manufacturing). This can be done upon request by the user 190, or in light of the user's request for another action, such as sending the 3D model 132 to additive manufacturing (AM) machine(s) and/or subtractive manufacturing (SM) machine(s) 170, or other manufacturing machinery, which can be directly connected to the computer 110, or connected via a network 140, as shown. This can involve a post-process carried out on the local computer 110 or a cloud service to export the 3D model 132 to an electronic document from which to manufacture. Note that an electronic document (which for brevity will simply be referred to as a document) can be a file, but does not necessarily correspond to a file. A document may be stored in a portion of a file that holds other documents, in a single file dedicated to the document in question, or in multiple coordinated files.

In any case, the CAD program(s) 116 can provide a document 160 (having toolpath specifications of an appropriate format) to an AM and/or SM machine 170 to produce a physical structure corresponding to at least a portion of the 3D model 132. An AM machine 170 can employ one or more additive manufacturing techniques, such as granular techniques (e.g., Powder Bed Fusion (PBF), Selective Laser Sintering (SLS) and Direct Metal Laser Sintering (DMLS)), extrusion techniques (e.g., Fused Deposition Modelling (FDM), which can include metals deposition AM). In some cases, the AM machine 170 builds the physical structure directly, and in some cases, the AM machine 170 builds a mold for use in casting or forging the physical structure. In addition, the user 190 can save or transmit the 3D model 132 for later use. For example, the CAD program(s) 116 can store the document(s) 130 that includes the 3D model 132.

An SM machine 170 can be a Computer Numerical Control (CNC) milling machine, such as a multi-axis, multi-tool milling machine used in the manufacturing process. For example, the CAD program(s) 116 can generate CNC instructions for a machine tool system 170 that includes multiple tools (e.g., solid carbide round tools of different sizes and shapes, and insert tools of different sizes that receive metal inserts to create different cutting surfaces) useable for various machining operations. Thus, in some implementations, the CAD program(s) 116 can provide a corresponding document 160 (having toolpath specifications of an appropriate format, e.g., a CNC numerical control (NC) program) to the SM machine 170 for use in manufacturing the physical structure using various cutting tools, etc.

In some implementations, the CAD program(s) 116 provide instructions to build a workpiece in a first stage of manufacturing, e.g., using direct AM and/or using forging and/or casting methods, and the CAD program(s) 116 also provide instructions to machine the workpiece, e.g., roughing and/or finishing operations, in a second stage of manufacturing, e.g., in a 3-axis CNC milling system, in order to form the completed structure. In general, various different manufacturing systems and techniques can be employed, either alone or in combination, to produce a final structure, and the CAD program(s) 116 can include suitable algorithms to generate toolpath specifications 160 for one or more of these various systems to manufacture a part that has been designed using the systems and techniques described in this application.

For example, making a manufacturable plastic part design is a fundamental requirement for injection molding. The systems and techniques can generate a manufacturable design of a plastic part that can be manufactured by an injection molding process. The systems and techniques can satisfy the requirements (e.g., specific wall thickness, material types, minimum thin sections, etc.) related to additive manufacturing or subtractive manufacturing. The systems and techniques can satisfy the requirements (e.g., minimum wall thickness, required minimum draft angle, minimum edge radius, specific materials, etc.) related to forge manufacturing. The systems and techniques can satisfy the requirements (e.g., wall thickness, draft angle, thin section, edge radius, etc.) related to mold/cast manufacturing and these requirements related to mold/cast manufacturing can be based on the manufacturing process and the material choice. The systems and techniques can generate specific command parameters (e.g., bend radius, overall length) that are needed for the tube/pipe bending manufacturing process and the selected material.

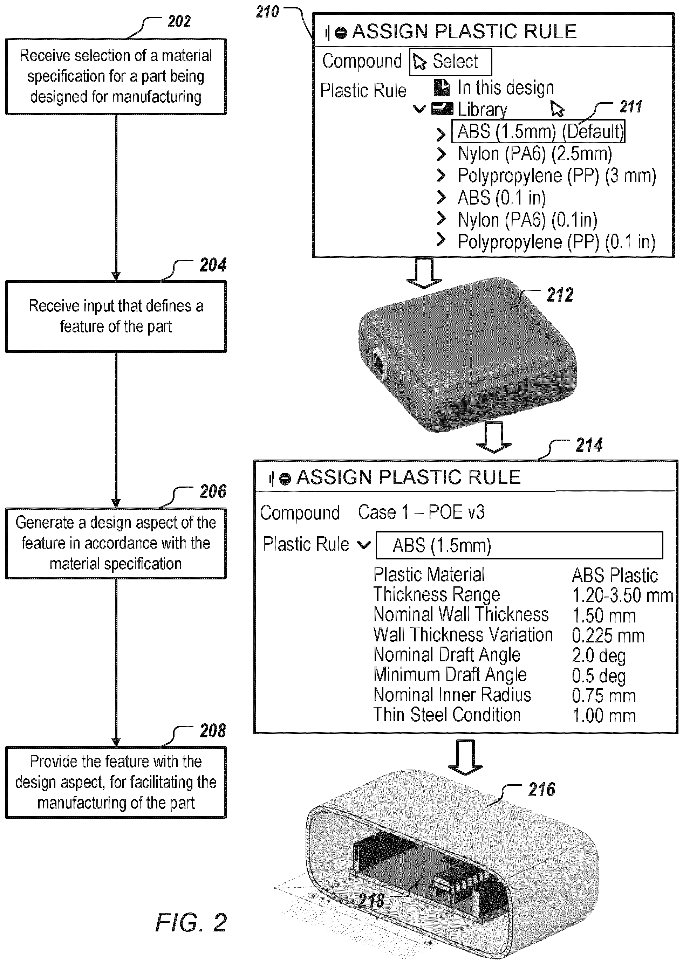

FIG. 2 is a flowchart showing an example of a process to generate a feature of a part with a material specification. Selection of a material specification for a part being designed for manufacturing is received 202, e.g., by the CAD program(s) 116. In some implementations, the CAD program(s) 116 can provide a user interface element 210 in which a user can select the material to be used for the part being designed for manufacturing. In some implementations, the CAD program(s) 116 can store the material specification of the materials in the memory 114 of the computer 110.

For example, the CAD program(s) 116 can receive selection of a material specification for an enclosure 212 of an Arduino board 218. The CAD program(s) 116 can provide a user interface element 210 that shows candidate materials to be used for the enclosure 212. For example, the candidate materials can include ABS (1.5mm) (e.g., the default material), Nylon (PA6) (2.5 mm), Polypropylene (PP) (3 mm), ABS (0.1 in), Nylon (PA6) (0.1 in), Polypropylene (PP) (0.1 in), and so on. In this example, the material selected for the enclosure is an ABS (1.5 mm) material 211 that has certain properties, e.g., ABS with normal wall thickness of 1.5 mm.

Input that defines a feature of the part is received 204, e.g., by the CAD program(s) 116. The feature of the part can include a structural feature or other types of features, such as a wall, a river web, a boss, a rib, etc. For example, the feature of the part can be a wall feature, such as the enclosure 212 of the Arduino board 218.

A design aspect of the feature is generated 206, e.g., by the CAD program(s) 116, in accordance with the material specification. The design aspect of the feature can include material thickness, taper angle, inner filet radius, etc. A material can have certain material manufacturing requirements and the material specification can link design aspects of features to the material manufacturing requirements of the material. For example, the material specification 214 of the ABS (1.5 mm) material 211 can include the following design aspects: plastic material ABS Plastic, thickness range 1.20-3.50 mm, normal wall thickness 1.50 mm, wall thickness variation 0.225 mm, normal draft angle 2.0 degrees, minimum draft angle 0.5 degrees, normal inner radius 0.75 mm, thin steel condition 1.00 mm, etc.

In some implementations, the CAD program(s) 116 can identify a declaration of material manufacturing requirements from the material specification. The CAD program(s) 116 can perform a design specification command of the feature based on the declaration of the material manufacturing requirements. Examples of the design specification command include "Extrude", "Shell", "Filet", "Boss", "Web", "Rib", "Draft", "Snap", "Thicken", "Emboss", and "Rest". For example, when the CAD program(s) 116 performs a "Shell" operation that generates the enclosure 216, the CAD program(s) 116 can automatically identify the selected ABS material and can identify the material specification, including the material manufacturing requirements, e.g., wall thickness of 1.50 mm, for the operation to be performed.

The feature with the design aspect is provided 208, e.g., by the CAD program(s) 116, for facilitating the manufacturing of the part. In some implementations, the CAD program(s) 116 can render a visualization of the feature with the design aspect to a display device presenting a user interface of the CAD program(s) 116. For example, the CAD program(s) 116 can render a visualization of the enclosure 216 with the design aspect, e.g., with a normal wall thickness of 1.50 mm, to a display device 120 presenting a user interface 122.

Thus, users of the CAD program(s) 116 do not need to manually enter a design aspect (e.g., material thickness) of a feature of a part when they design the feature of the part (e.g., shell a part or extrude new geometry) because features (e.g., a boss, a web, or a shell) are now tied to a material to be used. The CAD program(s) 116 does not require the users to enter values for each design aspect of each feature. In some implementations, if there is a need to change the material to one with different design aspects, e.g., thickness and/or draft angle requirements, the CAD program(s) 116 does not require the user to edit features manually or link the features manually to the same parameter.

In some implementations, the material specification can be a first material specification, and the CAD program(s) 116 can receive selection of a different material specification for the feature of the part. The CAD program(s) 116 can identify a different declaration of different material manufacturing requirements from the different material specification. The CAD program(s) 116 can change the design aspect of the feature by re-performing the design specification command of the feature based on the different declaration of the different material manufacturing requirements.

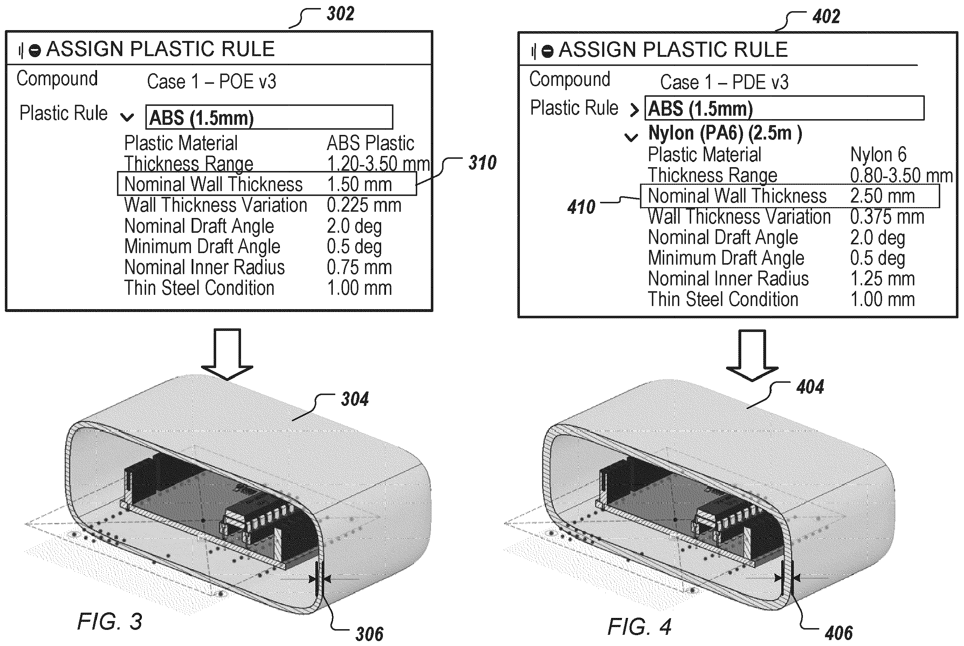

FIG. 3 is a graphical rendering showing an example of generating an enclosure of an Arduino board using ABS. In FIG. 3, the enclosure can be designed with the ABS material selected for manufacturing. The material specification 302 of the ABS material can include design aspects of the enclosure. For example, the material specification 302 of the ABS (1.5 mm) material can include the following design aspects: plastic material ABS Plastic, thickness range 1.20-3.50 mm, normal wall thickness 1.50 mm, wall thickness variation 0.225 mm, normal draft angle 2.0 degrees, minimum draft angle 0.5 degrees, normal inner radius 0.75 mm, thin steel condition 1.00 mm, etc. In this example, the normal wall thickness 310 of a part to be manufactured using the ABS (1.5 mm) material can be defined as 1.50 mm. The CAD program(s) 116 can render a visualization of the enclosure 304 with the design aspect, e.g., with a normal wall thickness 306 of 1.50 mm, to a display device 120 presenting a user interface 122.

The CAD program(s) 116 can receive selection of a different material specification for the feature of the part. FIG. 4 is a graphical rendering showing an example of generating an enclosure of an Arduino board using Nylon. A user can change the material from ABS to Nylon. The material specification 402 of the Nylon material can include design aspects of the enclosure. For example, the material specification 402 of the Nylon (PA6) (2.5 mm) material can include the following design aspects: plastic material Nylon 6, thickness range 0.80-3.50 mm, normal wall thickness 2.50 mm, wall thickness variation 0.375 mm, normal draft angle 2.0 degrees, minimum draft angle 0.5 degrees, normal inner radius 1.25 mm, thin steel condition 1.00 mm, etc. In this example, the normal wall thickness 410 of a part to be manufactured using the Nylon (PA6) (2.5 mm) material can be defined as 2.50 mm. The CAD program(s) 116 can automatically change the wall thickness of the enclosure 404 based on the material specification of the Nylon (PA6) (2.5 mm) material. The CAD program(s) 116 can render a visualization of the enclosure 404 with the design aspect, e.g., with a normal wall thickness 406 of 2.50 mm, to a display device 120 presenting a user interface 122.

In some implementations, the CAD program(s) 116 can present a user interface for user customization of material manufacturing requirements. The CAD program(s) 116 can receive input through the user interface for the user customization of the material manufacturing requirements. In response to receiving the input through the user interface, the CAD program(s) 116 can modify or add a declaration of the material manufacturing requirements. The CAD program(s) 116 can include a set of pre-created material specifications, and the user can customize these material specifications or create new ones using the user interface 122 of the CAD program(s) 116. Then, the CAD program(s) 116 can cause certain features of the part being designed to automatically adhere to the properties settings for the selected material. The CAD program(s) 116 can facilitate a user to modify or declare a material and to link together material manufacturing requirements for manufacturing a part with the material. Thus, the CAD program(s) 116 can eliminate or substantially reduce the risk of human error in part design, avoiding or reducing product failure in the field due to one or more features or parameters being incorrectly specified.

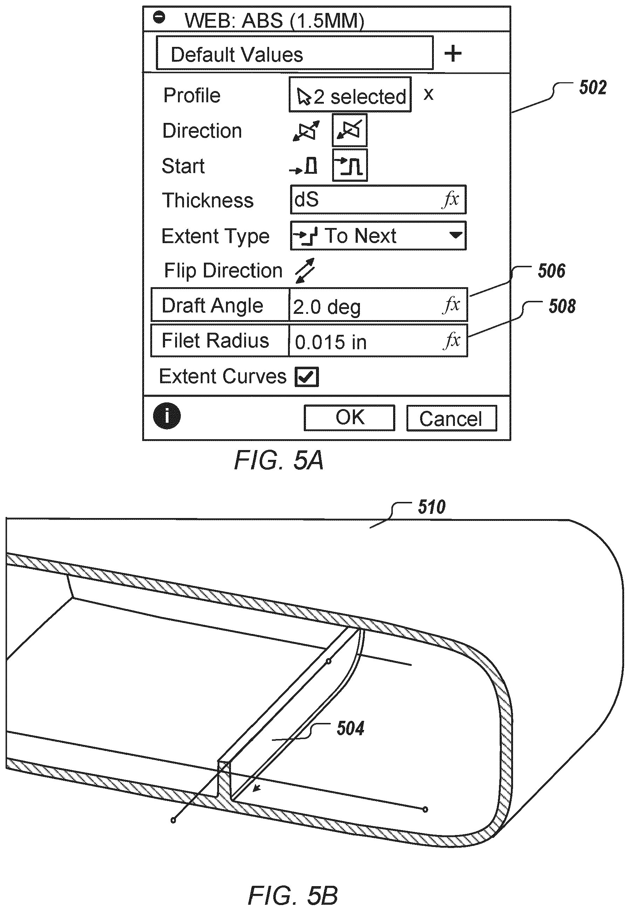

FIG. 5A is a graphical rendering showing an example of a user interface element 502 for user customization of material manufacturing requirements. The CAD program(s) 116 can include a set of pre-created material specifications for various materials. For example, the CAD program(s) 116 can include a material specification for the ABS (1.5 mm) material, such as draft angle 506 being 2.0 degrees and filet radius 508 being 0.015 inches. Other material specification for the ABS (1.5 mm) material listed on the user interface element 502 include: profile, direction, start, thickness, extend type, flip direction, extend curves, and so on. The CAD program(s) 116 can receive input through the user interface element 502 for the user customization of the material manufacturing requirements. For example, the CAD program(s) 116 can receive input through the user interface element 502 for the user customization of the draft angle 506, the filet radius 508, or both. The user can change the draft angle 506 from the default 2.0 degrees to 4.0 degrees.

Note that the enclosure in FIGs 2-4 is but one example of many different types of part features that can be designed using the systems and techniques described. In some implementations, the CAD program(s) 116 can receive an input that adds a new feature to a part that includes an existing feature, the design aspect of which has been generated in accordance with the material specification of a selected material. The CAD program(s) 116 can automatically determine one or more design aspects for the new feature being added to the part in accordance with the same selected material, and can generate the one or more design aspects of the new feature in accordance with the material specification of the selected material. The examples in FIGs 2-4 are designs using plastic materials, but the systems and techniques can be applied to designs using any types of materials by defining the material specification of a material type.

FIG. 5B is a graphical rendering showing an example of generating a river web 504 inside an enclosure 510. The enclosure 510 has been designed with the ABS material selected for manufacturing. The wall thickness of the enclosure has been generated in accordance with the material specification 214 of the selected ABS material. The CAD program(s) 116 can receive an input that adds a river web 504 to the enclosure 510. The CAD program(s) 116 can automatically pick up the selected ABS material for the river web being added to the part. The CAD program(s) 116 can automatically generate a design aspect of the river web 504, e.g., the wall thickness, the draft angle, and filet radius of the river web 504 based on the material specification 302 of the ABS material. For example, the river web 504 can have a draft angle of 2.0 degrees and a wall thickness of 1.50 mm, as specified in the material specification 302 of the ABS (1.5 mm) material.

In some implementations, the CAD program(s) 116 can allow the user to adjust one or more design aspects of the new feature using a user interface presented on the display device along with the feature of the part. In some implementations, the CAD program(s) 116 can initially generate a design aspect of the new part using the default value for the design aspect based on the material specification of the selected material. In some implementations, if the user changes the type of the material for the new part, the design aspect, e.g., wall thickness, of the new part can be automatically updated based on the material specification of the new material. For example, if the user changes the type of the material from ABS (1.5 mm) to Nylon (PA6) (2.5 mm), the wall thickness design aspect of the river web 504 can be automatically updated, e.g., with wall thickness of 2.50 mm instead of 1.50 mm.

In some implementations, if the user changes the value for the design aspect of the new part, e.g., changing the draft angle 506 or the filet radius 508 of the river web 504 using the user interface element 502, the CAD program(s) 116 can automatically update the design aspect of the new part based on the new value for the design aspect of the new part. In some implementations, if the user adds a new design aspect to the existing design aspects of the new part, e.g., using the user interface element 502, the CAD program(s) 116 can automatically update the new design aspect of the new part based on the value for the new design aspect of the new part.

In some implementations, the CAD program(s) 116 can receive a user input that changes the design aspect of the feature, and the CAD program(s) 116 can provide a design recommendation for the design aspect of the feature based on the material specification. For example, a user can change a value for the design aspect of the feature, e.g., changing the wall thickness using a user interface 122. The CAD program(s) 116 can compare the change for the design aspect received from the user input with the material specification, e.g., the declaration of material manufacturing requirements in the material specification. In some cases, the value for the design aspect of the feature after the change from the user input can be outside the desired range for the design aspect specified in the material specification, and the CAD program(s) 116 can provide a design recommendation for the design aspect, e.g., showing the desired range for the design aspect specified in the material specification. In some cases, the value for the design aspect of the feature after the change from the user input may not be a recommended value (e.g., an optimal value or a typical value) in accordance with the material specification, and the CAD program(s) 116 can provide a design recommendation for the design aspect, e.g., showing the recommended value for the design aspect of the feature.

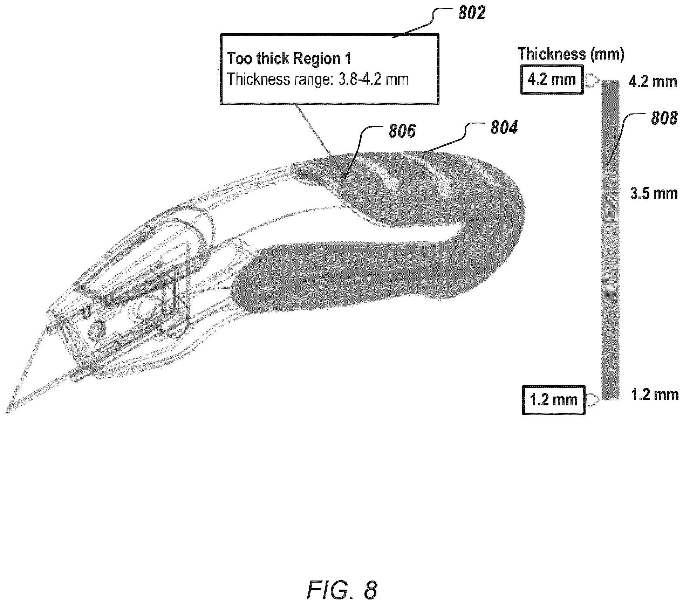

FIG. 8 is a graphical rendering showing an example of providing a design recommendation. The CAD program(s) 116 can be used to design a handle 804 of a utility knife, and the handle 804 is being designed for manufacturing. The CAD program(s) 116 can receive a selection of a material specification for the handle, e.g., a rubber material. The material specification for rubber can include material manufacturing requirements for the rubber material, e.g., thickness range 3.8-4.2 mm. The CAD program(s) 116 can automatically provide a default design for the handle 804 in accordance with the material specification for the rubber.

In some cases, a user may want to customize a certain design aspect of the part, and the CAD program(s) 116 can receive a user input that changes the design aspect of the feature, e.g., changing the thickness of the handle 804. In some cases, the change to the design aspect may contradict the manufacturing requirements defined in the material specification. For example, the user input can change the thickness at the region 806 from 3.8 mm to 5 mm. The CAD program(s) 116 can provide a design recommendation for the design aspect of the feature based on the material specification. The CAD program(s) 116 can check the manufacturability with a manufacturing process, e.g., injection molding.

For example, the CAD program(s) 116 can show a message 802 on the user interface. The message 802 can indicate that the region 806 is too thick, e.g., "Too thick Region 1". The message 802 can provide a design recommendation for the thickness at the region 806 based on the material specification for the rubber material, e.g., "Thickness range: 3.8-4.2 mm". In some implementations, the CAD program(s) can highlight design errors in the model of the handle 804. For example, the CAD program(s) 116 can show a slider 808 in the user interface, and a user can use the slider 808 to pinpoint the problematic area 806 in the graphics window showing the design of the handle 804 to find the specific area of violation. A user can check the design recommendation and can decide whether or not to fix the errors. For example, after receiving the design recommendation 802, the user may determine to adjust the thickness at the region 806, may determine to select a different material, or a combination of both. Various other types of design violations, such as taper angles being too shallow or knife edges being too sharp, can also be flagged in the message 802 (with appropriate design advice) and be pinpointed using the slider 808 in order to assist the user in ensuring that the part will be manufacturable, as described in further detail below.

In some implementations, the CAD program(s) 116 can include a user interface through which a user can declare a new material that has a desired material specification. For example, the user can create a "Nylon (PA6) (2.5 mm) temp" material specification based on the existing Nylon (PA6) (2.5 mm) material specification 402. The user can change one or more material manufacturing requirements in the user interface, e.g., changing the normal draft angle from 2.0 degrees to 4.0 degrees. If the user selects the "Nylon (PA6) (2.5 mm) temp" material for the river web 504, the CAD program(s) 116 can automatically update the river web 504 to one that has a deeper draft angle, e.g., 4.0 degrees instead of 2.0 degrees.

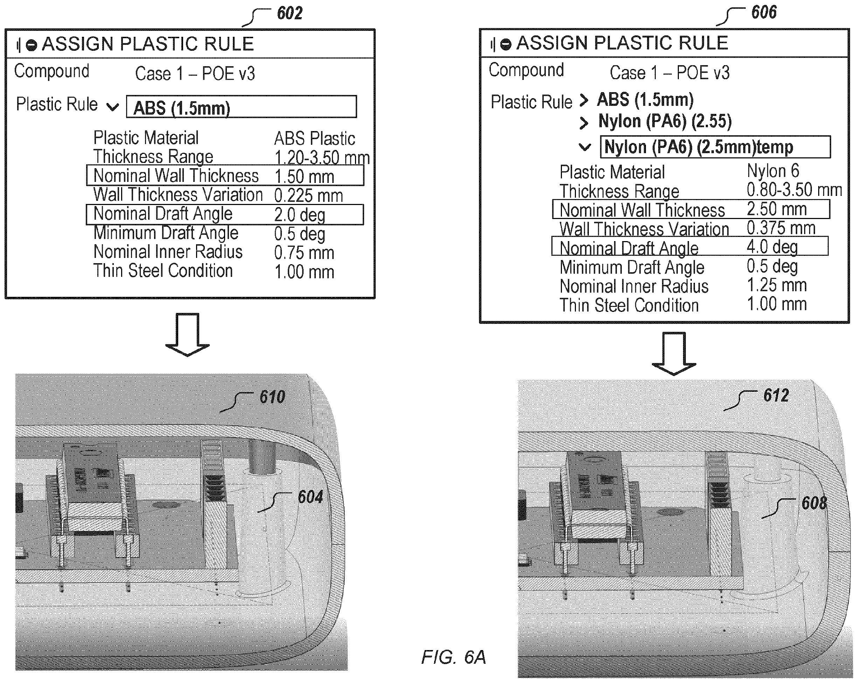

FIG. 6A is a graphical rendering showing an example of generating a boss 604 using Acrylonitrile Butadiene Styrene (ABS) and generating a boss 608 using Nylon. The CAD program(s) 116 can receive an input that adds a boss 604 to an enclosure 610. The added boss feature 604 can also be material-aware and can have default design aspects that make the boss feature 604 manufacturable with the selected type of material. For example, the CAD program(s) 116 can generate design aspects of the boss 604 in accordance with the material specification 602 of the ABS (1.5 mm) material. For example, the material specification 602 of the ABS (1.5 mm) material can include the following design aspects: plastic material ABS Plastic, thickness range 1.20-3.50 mm, normal wall thickness 1.50 mm, wall thickness variation 0.225 mm, normal draft angle 2.0 degrees, minimum draft angle 0.5 degrees, normal inner radius 0.75 mm, thin steel condition 1.00 mm, etc. Thus, when the boss 604 is added, the wall thickness, draft angle, taper angle and inner filet radius can be pulled automatically from the information declared in the material specification 602 for the ABS (1.5 mm) material. For example, the wall thickness of the boss 604 can be 1.50 mm and the normal draft angle of the boss 604 can be 2.0 degrees.

If the material is changed to a new material, the CAD program(s) 116 can automatically update the relevant design aspects of the enclosure and the boss using the material specification of the new material. For example, the material of the enclosure 612 and the boss 608 can be changed to a "Nylon (PA6) (2.5 mm) temp" material (e.g., a user customized material based on Nylon (PA6) (2.5 mm)), and CAD program(s) 116 can automatically update the design aspects of the enclosure 612 and the boss 608 in accordance with the material specification 606 of the "Nylon (PA6) (2.5 mm) temp" material. For example, the material specification 606 of the Nylon (PA6) (2.5 mm) temp material can include the following design aspects: plastic material Nylon 6, thickness range 0.8-3.50 mm, normal wall thickness 2.50 mm, wall thickness variation 0.375 mm, normal draft angle 4.0 degrees, minimum draft angle 0.5 degrees, normal inner radius 1.25 mm, thin steel condition 1.00 mm, etc. In this example, the wall thickness of the enclosure 612 and the boss 608 can be 2.50 mm, and the normal draft angle of the boss 608 can be 4.0 degrees.

In some implementations, the feature of the part being designed for manufacturing can include two or more logically connected but distinct elements of the part. The CAD program(s) 116 can obtain a rule that takes the material specification as input and describes a logical connection between the two or more logically connected but distinct elements of the part. The CAD program(s) 116 can generate the design aspect of the feature using the rule and in accordance with the material specification. For example, the rule can transform a single parameter value, e.g., thickness or draft angle, into multiple parameter values of the elements of a boss feature.

A feature can include two or more logically connected but distinct elements. The two or more elements are distinct elements, e.g., separate geometries of the part being designed that the CAD program(s) 116 would not normally consider linked with each other, but for the logical connection described by the rule. For example, a feature can be a hook and a loop of a snap fit connection, or two pieces (e.g., a boss and a bolt) of a boss connection, etc. The elements of the such features need to mate together well, and the systems and techniques described in this specification can automatically ensure such elements mate together well, without the user having to engage in time-consuming manual redesign of the individual elements of a feature when a change is made to the material being used for the design feature of the part, including a change that results in different materials being used for the distinct elements of the feature. Because the two or more elements are logically connected, the design of the feature should make sure the two or more elements have a certain relationship, e.g., correct alignment, size relationship, rotation relationship. The CAD program(s) 116 can obtain (e.g., from a database) or include a rule that takes the material specification as input and derives the parameters for the features of the part and the parameters can define the relationship between the two or more elements. The rule can be predetermined by the CAD program(s) 116, customized by a user through a user interface, or both.

The systems and techniques can include a rules engine that takes the material information and derives the features. In some implementations, one or more rules can be stored in a database. The database can be at the computer 110 locally, or can be at one or more remote computer systems 150. The one or more rules can be shared among users. For example, one user can define a new rule for some feature composed of logically connected elements, and then other users can have access to the new rule, e.g., through the database.

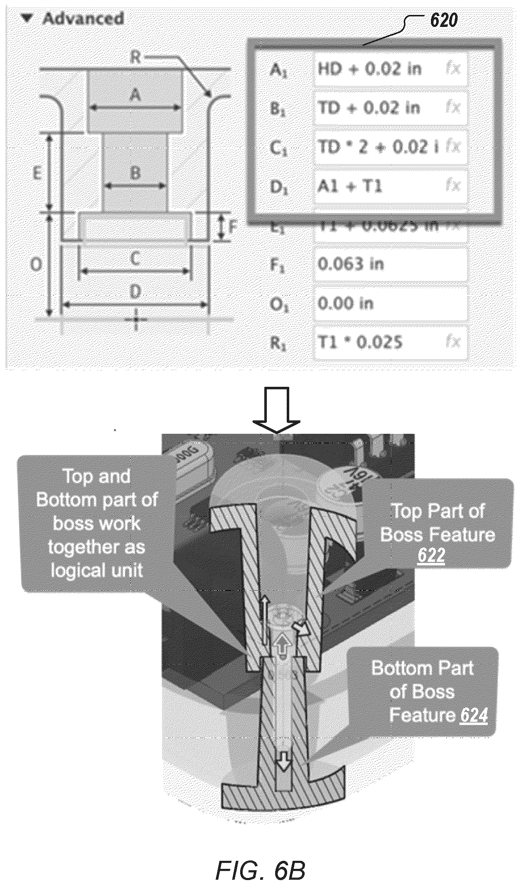

FIG. 6B is a graphical rendering showing an example of generating a boss that includes a top part 622 and a bottom part 624. The top part 622 and bottom part 624 of the boss are two distinct elements of the part and work together as a logical unit. The CAD program(s) 116 can obtain a rule 620 that describes the logical connection between the top part and bottom part of the boss. The rule 620 can take the material specification as input and can determine the parameters for the top part and the bottom part. In some implementations, the rule 620 can determine the parameters for the top part and the bottom part based on both the material specification and parameters of a feature of a part, e.g., a fastener or bolt in the boss. For example, when creating the boss, the system can take into consideration several parameters to create the boss. For the overall boss diameter C1, the system can examine the thread diameter (TD) of the fastener and can have a multiplier to establish the size of the boss, e.g., C1=TD*2+0.02 inches. If the fastener or material changes, the system can update the boss diameter based on these rules.

The rule 620 can define several design aspects of the boss, e.g., overall diameter, thickness, taper, mating feature to snap together, fillets around the base, and other features that are driven by the rule. For example, the rule for the top part 622 of the boss can include: "A1=HD+0.02 in" and "B1=TD+0.02 in". The rule for the bottom part 624 of the boss can include: "C1=TD*2+0.02 in" and "D1=A1+T1". Here, HD (e.g., "Head Diameter") and TD (e.g., "Thread Diameter") are the design aspects of the fastener and can be configured or changed by a user through the UI of the CAD program(s) 116. The T1 is a design aspect of the boss feature, e.g., the wall thickness, declared in the material specification. Thus, the rule 620 can make sure that the top and bottom parts of the boss can align with each other and the size of the top and bottom parts of the boss can fit well with each other. The CAD program(s) 116 can generate the boss feature using the rule 620 in accordance with the material specification for the boss feature. When creating the boss, the CAD program(s) 116 can take into consideration several parameters defined by the rule 620, and can automatically create the boss feature while being aware of the logical connection between the top and bottom parts of the boss. If one of the top and bottom parts of the boss changes, the CAD program(s) 116 can update the other part of the boss based on the rule. If the material for the boss (or an element thereof) changes, the CAD program(s) 116 can automatically update the parameters for the top and bottom parts of the boss based on the rule.

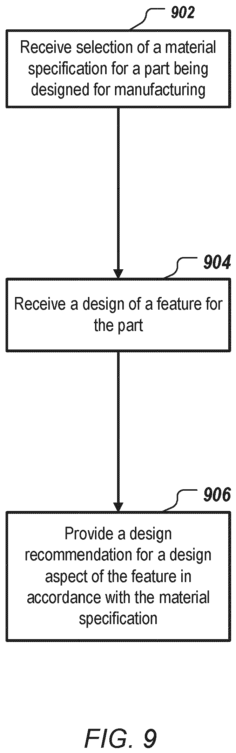

FIG. 9 is a flowchart showing an example of a process to provide a design recommendation for a feature of a part with a material specification. Selection of a material specification for a part being designed for manufacturing is received 902, e.g., by the CAD program(s) 116. In some implementations, the CAD program(s) 116 can provide a user interface element 210 in which a user can select the material to be used for the part being designed for manufacturing. In some implementations, the CAD program(s) 116 can store the material specification of the materials in the memory 114 of the computer 110. For example, referring to FIG. 8, the CAD program(s) 116 can receive selection of a rubber material specification for a handle 804 of a utility knife.

Referring back to FIG. 9, a design of a feature for the part is received 904, e.g., by the CAD program(s) 116. For example, the CAD program(s) 116 can receive a design for the handle 804 (e.g., the user can load the design from a storage device or create the design with the user interface tools of the CAD program(s) 116) and the design can include values for the various design aspects of the handle 804, such as wall thickness, taper angle, and knife edge.

A design recommendation for a design aspect of the feature is provided 906 in accordance with the material specification, e.g., by the CAD program(s) 116. The CAD program(s) 116 can validate the manufacturability of the part by checking the design aspect of the feature of the part, such as checking the knife edge threshold, validating the thickness and minimum draft angle. For example, the CAD program(s) 116 can provide a design recommendation for the thickness at the region 806 of the handle 804. The CAD program(s) 116 can check the manufacturability of the part in accordance with a manufacturing process, e.g., injection molding. The design recommendation can include a message of "Too thick region 1" and "Thickness range: 3.8-4.2mm".

In some implementations, the CAD program(s) 116 can highlight design errors or design issues found in the model of the design. For example, the CAD program(s) 116 can show a slider 808 in the user interface and a user can use the slider 808 to pinpoint the problematic area 806 in the graphics window showing the design of the handle 804 to find the specific area of violation. The CAD program(s) 116 can determine the design recommendation using the material specification for the rubber material. A user can check the design recommendation and can decide whether to fix or skip the identified issues.

In some implementations, the design recommendation can include a recommended range for a value of the design aspect. For example, the design recommendation can include a message of "Thickness range: 3.8-4.2mm". The CAD program(s) 116 can receive an updated design of the feature, and the updated design can include an updated value of the design aspect that is within the recommended range. For example, a user can provide an updated thickness value that is within the thickness range of the rubber material.

In some implementations, the design recommendation can include an issue for the design aspect. The CAD program(s) 116 can receive selection of a different material specification for the feature of the part to remove the issue for the design aspect. For example, a user can determine to change the material from rubber to another material that allows a thicker wall.

In some implementations, when large thickness variation happens, the CAD program(s) 116 can highlight or list regions with the problem. The CAD program(s) 116 can provide several recommendations, such as maintaining uniform thickness, controlling the variable under a threshold (e.g., 25%) of the normal wall thickness, adjusting draft angle for ribs, etc. For example, the CAD program(s) 116 can determine that the wall thickness for the handle 804 has large variation. The CAD program(s) 116 can highlight regions of the handle with the thickness problem. A user can take the design recommendation that suggests controlling the variation of the wall thickness under 25% of the normal wall thickness in order to remove the issue of large thickness variation.

Thus, the CAD program(s) 116 can provide design advice that links to a material previously defined and can identify manufacturing issues, such as walls that are too thin or too thick, not enough draft angle on a face, a knife edge in the model, an undercut, etc. Users can thus readily test early and determine if their model violates any of these material manufacturing requirements of a selected material for the model. In some implementations, if the material for the model is changed, the CAD program(s) 116 can examine the model based on the new material to determine if there are any violations per the material manufacturing requirements of the new material. Thus, the CAD program(s) 116 can help users design their products faster with built-in material standards and can look for potential design issues that could cause manufacturing issues. Moreover, since the user can employ the CAD program(s) 116 to define new material specifications and new rules for logically connected elements of a design feature, the CAD program(s) 116 can provide an end-to-end workflow of defining a material, efficiently creating part features to be built with one or more specified materials, and validating the part to ensure it is manufacturable.

The systems and techniques described in this specification can be applicable to various manufacturing systems and techniques, such as selecting a material for injection molding, casting, or forging. For example, the CAD program(s) 116 can facilitate plastic material declaration for injection molding. Moreover, a similar declaration process can be employed with other design products, e.g., routed systems (such as frames, pipes, tubes, or wires), production molds and/or stamping, or soft goods and/or wrapped goods (e.g., un-forming or flattening goods), etc. For example, when applied to plastic injection molding, the systems and techniques described can be used to define material specifications for various materials as part of the design process, and can prevent end users from inputting the same material manufacturing requirements for similar features. When having a material change, the systems and techniques described can update all of the impacted features of a part in accordance with a single material specification, rather than manually changing design aspects of each feature impacted by the material change.

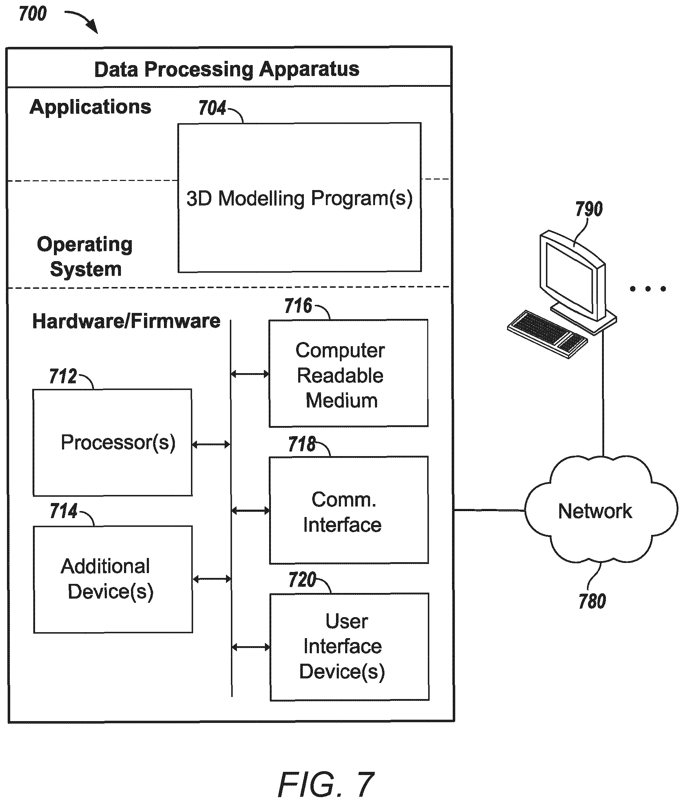

FIG. 7 is a schematic diagram of a data processing system including a data processing apparatus 700, which can be programmed as a client or as a server. The data processing apparatus 700 is connected with one or more computers 790 through a network 780. While only one computer is shown in FIG. 7 as the data processing apparatus 700, multiple computers can be used. The data processing apparatus 700 includes various software modules, which can be distributed between an application layer and an operating system. These can include executable and/or interpretable software programs or libraries, including tools and services of one or more 3D modeling programs 704 that implement the systems and techniques described herein. Thus, the 3D modeling program(s) 704 can be CAD program(s) that generates, with a material specification of a selected material, a design aspect of a feature of a part being designed for manufacturing.

Further, the program(s) 704 can implement physical simulation operations (finite element analysis (FEA) or other), generative design operations (e.g., using level-set based method(s) for generative design), and/or manufacturing control operations (e.g., generating and/or applying toolpath specifications to effect manufacturing of designed objects). The number of software modules used can vary from one implementation to another. Moreover, the software modules can be distributed on one or more data processing apparatus connected by one or more computer networks or other suitable communication networks.

The data processing apparatus 700 also includes hardware or firmware devices including one or more processors 712, one or more additional devices 714, a computer readable medium 716, a communication interface 718, and one or more user interface devices 720. Each processor 712 is capable of processing instructions for execution within the data processing apparatus 700. In some implementations, the processor 712 is a single or multi-threaded processor. Each processor 712 is capable of processing instructions stored on the computer readable medium 716 or on a storage device such as one of the additional devices 714. The data processing apparatus 700 uses the communication interface 718 to communicate with one or more computers 790, for example, over the network 780. Examples of user interface devices 720 include a display, a camera, a speaker, a microphone, a tactile feedback device, a keyboard, a mouse, and VR and/or AR equipment. The data processing apparatus 700 can store instructions that implement operations associated with the program(s) described above, for example, on the computer readable medium 716 or one or more additional devices 714, for example, one or more of a hard disk device, an optical disk device, a tape device, and a solid state memory device.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a non-transitory computer-readable medium for execution by, or to control the operation of, data processing apparatus. The computer-readable medium can be a manufactured product, such as a hard drive in a computer system or an optical disc sold through retail channels, or an embedded system. The computer-readable medium can be acquired separately and later encoded with the one or more modules of computer program instructions, e.g., after delivery of the one or more modules of computer program instructions over a wired or wireless network. The computer-readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that produces an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., an LCD (liquid crystal display) display device, an OLED (organic light emitting diode) display device, or another monitor, for displaying information to the user, and a keyboard and a pointing device, e.g., a mouse or a trackball, by which the user can provide input to the computer. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a browser user interface through which a user can interact with an implementation of the subject matter described is this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the invention have been described. Other embodiments are within the scope of the following claims. In addition, actions recited in the claims can be performed in a different order and still achieve desirable results.

### Examples

Example 1. A method comprising:
receiving, by a computer aided design program, selection of a material specification for a part being designed for manufacturing;
receiving, by the computer aided design program, input that defines a feature of the part;
generating, by the computer aided design program, a design aspect of the feature in accordance with the material specification; and
providing, by the computer aided design program, the feature with the design aspect, for facilitating the manufacturing of the part.

Example 2. The method of Example 1, wherein the generating comprises:
identifying a declaration of material manufacturing requirements from the material specification; and
performing a design specification command of the feature based on the declaration of the material manufacturing requirements.

Example 3. The method of Example 2, wherein the material specification is a first material specification, and the method comprises:
receiving selection of a different material specification for the feature of the part;
identifying a different declaration of different material manufacturing requirements from the different material specification; and
changing the design aspect of the feature by re-performing the design specification command of the feature based on the different declaration of the different material manufacturing requirements.

Example 4. The method of any one of the previous Examples, further comprising:
receiving a user input that changes the design aspect of the feature; and
providing a design recommendation for the design aspect of the feature based on the material specification.

Example 5. The method of any one of the previous Examples, comprising:
presenting a user interface for user customization of material manufacturing requirements;
receiving input through the user interface for the user customization of the material manufacturing requirements; and
in response to receiving the input through the user interface, modifying or adding a declaration of the material manufacturing requirements.

Example 6. The method of any one of the previous Examples, wherein the feature comprises two or more logically connected but distinct elements of the part, and generating the design aspect of the feature comprises:
obtaining, by the computer aided design program, a rule that takes the material specification as input and describes a logical connection between the two or more logically connected but distinct elements of the part; and
generating, by the computer aided design program, the design aspect of the feature using the rule and in accordance with the material specification.

Example 7. A method comprising:
receiving, by a computer aided design program, selection of a material specification for a part being designed for manufacturing;
receiving, by the computer aided design program, a design of a feature for the part; and
providing, by the computer aided design program, a design recommendation for a design aspect of the feature in accordance with the material specification.

Example 8. The method of Example 7, wherein the design recommendation comprises a recommended range for a value of the design aspect, and the method comprises:
receiving an updated design of the feature, wherein the updated design comprises an updated value of the design aspect that is within the recommended range.

Example 9. The method of any one of Examples 7 or 8, wherein the design recommendation comprises an issue for the design aspect, and the method comprises:
receiving selection of a different material specification for the feature of the part to remove the issue for the design aspect.

Example 10. A system comprising:
a non-transitory storage medium having instructions of a computer aided design program stored thereon; and
one or more data processing apparatus configured to run the instructions of the computer aided design program to perform operations according to the methods of any one of the Examples 1 to 6.

Example 11. A non-transitory computer-readable medium encoding instructions operable to cause data processing apparatus to perform operations according to the methods of any one of the Examples 1 to 6.

Example 12. A system comprising:
a non-transitory storage medium having instructions of a computer aided design program stored thereon; and
one or more data processing apparatus configured to run the instructions of the computer aided design program to perform operations according to the methods of any one of the Examples 7 to 9.

Example 13. A non-transitory computer-readable medium encoding instructions operable to cause data processing apparatus to perform operations according to the methods of any one of the Examples 7 to 9.

## Claims

1. A computer-implemented method, the method comprising:
receiving (202), by a computer aided design program, selection of a material specification of a material to be used for manufacturing a part, wherein the material specification is used for designing the part for manufacturing;
receiving (204), by the computer aided design program, input that defines a structural feature of the part;
generating (206), by the computer aided design program, a design aspect of the structural feature in accordance with the material specification; and
providing (208), by the computer aided design program, the structural feature with the design aspect, for facilitating the manufacturing of the part.

2. The method of claim 1, wherein the generating comprises:
identifying a declaration of material manufacturing requirements from the material specification; and
performing a design specification command to generate the design aspect of the structural feature based on the declaration of the material manufacturing requirements.

3. The method of claim 2, wherein the material specification is a first material specification, and the method comprises:
receiving selection of a different material specification for the structural feature of the part;
identifying a different declaration of different material manufacturing requirements from the different material specification; and
changing the design aspect of the structural feature by re-performing the design specification command of the structural feature based on the different declaration of the different material manufacturing requirements.

4. The method according to any one of the preceding claims, further comprising:
receiving a user input that changes the design aspect of the structural feature; and
providing a design recommendation for the design aspect of the structural feature based on the material specification.

5. The method of claim 4, wherein providing the design recommendation for the design aspect comprises:
determining whether the change of the design aspect contradicts manufacturing requirements defined in the material specification.

6. The method of claim 4, wherein providing the design recommendation for the design aspect of the feature comprises:
checking manufacturability of the structural feature of the part with a selected manufacturing process.

7. The method of claim 4, wherein the design recommendation comprises a recommended range for a value of the design aspect, and the method comprises:
receiving an updated design of the feature, wherein the updated design comprises an updated value of the design aspect that is within the recommended range.

8. The method of claim 4, wherein the design recommendation comprises an issue for the design aspect, and the method comprises:
receiving selection of a different material specification for the feature of the part to remove the issue for the design aspect.

9. The method according to any one of the preceding claims, wherein generating the design aspect of the structural feature of the part comprises:
generating a three dimensional model for the structural feature of the part in accordance with the material specification,
wherein the method comprises:
sending the three dimensional model to an additive manufacturing or a subtractive manufacturing machine for use in manufacturing of the structural feature of the part.

10. The method according to any one of the preceding claims, comprising:
presenting a user interface for user customization of material manufacturing requirements;
receiving input through the user interface for the user customization of the material manufacturing requirements; and
in response to receiving the input through the user interface, modifying or adding a declaration of the material manufacturing requirements.

11. The method according to any one of the preceding claims, wherein the structural feature comprises two or more logically connected but distinct elements of the part, and generating the design aspect of the structural feature comprises:
obtaining, by the computer aided design program, a rule that takes the material specification as input and describes a logical connection between the two or more logically connected but distinct elements of the part; and
generating, by the computer aided design program, the design aspect of the structural feature using the rule and in accordance with the material specification.

12. The method according to any one of the preceding claims, the method comprising:
generating a toolpath specification for the structural feature with the design aspect for use for manufacturing at least a portion of the part by an additive manufacturing or subtractive manufacturing machine; and
manufacturing, based on the toolpath specification, at least the portion of the part including the structural feature at the additive manufacturing or the subtractive manufacturing machine from the material of the selected material specification.

13. A system comprising:
a non-transitory storage medium having instructions of a computer aided design program stored thereon; and
one or more data processing apparatus configured to run the instructions of the computer aided design program to perform operations according to the methods of any one of claims 1 to 12.

14. A non-transitory computer-readable medium encoding instructions operable to cause data processing apparatus to perform operations according to the methods of any one of claims 1 to 12.
